# EUROPÄISCHE PATENTANMELDUNG

(11) **EP 4 545 872 A1**
(43) Veröffentlichungstag der Anmeldung: **30.04.2025**
(21) Anmeldenummer: 24207935.8
(22) Anmeldetag: 21.10.2024
(51) Int. Cl.: F24H 9/14, F16L 27/00, F16L 37/00, F24F 13/00, F25B 30/00

(54) **ROHRSTÜCK UND GERÄTEMODUL FÜR EINE KRAFTWÄRMEMASCHINE**

(30) Priorität: 23.10.2023 DE 102023210442
(71) Anmelder: Glen Dimplex Deutschland GmbH, 95326 Kulmbach (DE)
(72) Erfinder: ERLMANN, Björn, 95512 Neudrossenfeld (DE)
(74) Vertreter: FDST Patentanwälte

(57) **Zusammenfassung**

Die Erfindung betrifft ein Rohrstück (24) ausgebildet als Rohrdurchführung (24) für eine Gehäusewandung (22) und aufweisend einen Rohrabschnitt (30), wobei der Rohrabschnitt (30) außenseitig eine Nut (32) aufweist, die zur Aufnahme eines Wandungsabschnitts (44) der Gehäusewandung (22) ausgebildet ist, wobei sich die Nut (32) in einer Querrichtung (34) erstreckt und wobei eine Ausdehnung der Nut (32), nämlich eine Breite (B) der Nut (32), entlang der Querrichtung (34) derart variiert, dass der Rohrabschnitt (30) relativ zum Wandungsabschnitt (44) verkippbar ist.

## Beschreibung

Die Erfindung betrifft ein Rohrstück, welches als Rohrdurchführung für eine Gehäusewandung ausgebildet ist. Zudem betrifft die Erfindung ein Gerätemodul für eine Kraftwärmemaschine.

Kraftwärmemaschinen stehen in unterschiedlichen Ausführungsvarianten einerseits und verschiedenen Leistungsklassen andererseits zur Verfügung. Zu den Kraftwärmemaschinen gehören Kälteanlagen und Wärmepumpen.

Wärmepumpen werden im häuslichen Bereich beispielsweise zur Betriebswassererwärmung eingesetzt. Ebenso üblich ist eine Nutzung zur Raumtemperierung. Sogenannte reversible Wärmepumpen eignen sich dabei sowohl zum Heizen als auch zum Kühlen von Raumluft.

Weiter kommen im häuslichen Bereich vor allem Wärmepumpen zum Einsatz, deren Leistungen in einem Bereich bis etwa 16 kW liegen. Dabei sind sowohl Wärmepumpen in sogenannter Monoblock-Bauweise üblich als auch Wärmepumpen in sogenannter Split-Bauweise.

Typisch sind für den häuslichen Bereich außerdem Wärmepumpen, die als Luft-Wasser-Wärmepumpen ausgebildet sind. Bei diesen wird Wärme aus der Umgebungsluft entnommen und auf ein Kältemittel übertragen, welches dann in einem Kältemittelkreislauf in an sich bekannter Weise geführt und auf ein höheres Temperaturniveau gebracht wird.

Insbesondere bei einer Wärmepumpe für den häuslichen Bereich besteht oft das Problem, dass für die Wärmepumpe nur wenig Raum zur Verfügung steht und dass die Installation der Wärmepumpe in beengten Platzverhältnissen vorgenommen werden muss.

Ausgehend hiervon liegt der Erfindung die Aufgabe zugrunde, eine Möglichkeit anzugeben, die Installation einer Kraftwärmemaschine, also beispielsweise einer Wärmepumpe für den häuslichen Bereich, zu erleichtern.

Diese Aufgabe wird erfindungsgemäß gelöst durch ein Rohrstück mit den Merkmalen des Anspruchs 1 und durch ein Gerätemodul für eine Kraftwärmemaschine mit den Merkmalen des Anspruchs 8. Vorteilhafte Ausgestaltungen und Weiterbildungen sind Gegenstand der Unteransprüche. Die im Hinblick auf das Rohrstück angeführten Vorteile und Ausgestaltungen sind sinngemäß auch auf das Gerätemodul übertragbar und umgekehrt.

Das erfindungsgemäße Rohrstück ist dabei ausgebildet als Rohrdurchführung für eine Gehäusewandung. Insbesondere ist es ausgebildet als Rohrdurchführung durch eine Gehäusewandung oder einen Gehäusewandungsbereich, die bzw. der durch ein einfaches, quaderförmiges Blech ausgebildet ist.

Das Rohrstück, also das erfindungsgemäße Rohrstück, weist hierbei einen Rohrabschnitt auf sowie außenseitig eine Nut, wobei die Nut in dem genannten Rohrabschnitt positioniert ist. Bei dem erfindungsgemäßen Rohrstück handelt es sich also quasi um ein Stück Rohr, welches in einem Abschnitt, nämlich dem genannten Rohrabschnitt, eine Nut aufweist.

Jene Nut ist hierbei ausgebildet zur Aufnahme eines Wandungsabschnitts oder Wandungsbereichs der Gehäusewandung und erstreckt sich in einer Querrichtung. Bevorzugt ist die Nut dabei in der Querrichtung langgestreckt. Außerdem bevorzugt ist die Querrichtung quer zu einer Längsrichtung des Rohrstücks orientiert, also insbesondere senkrecht oder in guter Näherung senkrecht zu der Längsrichtung.

Unter der zuvor genannten Längsrichtung ist im Sinne dieser Anmeldung vorzugweise eine Richtung zu verstehen, in der das Rohrstück langgestreckt ist. Alternativ oder zusätzlich handelt es sich der Längsrichtung um eine Richtung, in der ein Fluid das Rohrstück durchfließt, wenn durch dieses ein Fluid durchgeleitet wird.

Bei der zuvor genannten Nut handelt es sich zweckdienlicherweise um eine Vertiefung und nicht um einen Durchbruch. Davon unabhängig variiert eine Ausdehnung der Nut, nämlich eine Breite der Nut, entlang der Querrichtung derart, dass der Rohrabschnitt relativ zum Wandungsabschnitt verkippbar ist. D. h., dass die Nut typischerweise derart ausgestaltet ist, dass eine Fixierung oder Lagerung des Rohrabschnitts an/in der Gehäusewandung ermöglicht ist, bei der der Rohrabschnitt relativ zum Wandungsabschnitt verkippbar ist und zwar vorzugsweise zumindest solange das Rohrstück lediglich mit der Gehäusewandung verbunden ist und insbesondere nicht an eine feststehende Rohrleitung/Fluidleitung angeschlossen ist. Die Breite der Nut entspricht dabei typischerweise der Ausdehnung der Nut quer zur Querrichtung und insbesondere der Ausdehnung der Nut in der zuvor genannten Längsrichtung.

Mit dem Rohrabschnitt ist dann zweckdienlicherweise das ganze Rohrstück relativ zum Wandungsabschnitt verkippbar. Als Folge ist das Rohrstück typischerweise flexibler einsetzbar. Es lassen sich also zum Beispiel wahlweise gerade oder schräge Rohrdurchführungen mit dem Rohrstück realisieren. Zudem lassen sich prinzipiell auch nicht-feststehende Rohrdurchführungen mit dem Rohrstück realisieren, bei denen die jeweilige Rohrdurchführung auch nach Fertigstellung einer Installation weiterhin verkippbar ist.

Unter verkippbar ist dabei insbesondere eine Drehbarkeit um eine Drehachse zu verstehen, wobei die Drehachse bevorzugt quer zur Querrichtung und weiter bevorzugt quer zur Längsrichtung orientiert ist. Die Drehachse ist dann vorzugsweise senkrecht zur Querrichtung und senkrecht zur Längsrichtung orientiert. Zudem bevorzugt ist die Drehbarkeit durch die Geometrie der Nut auf einen Drehwinkel begrenzt, dessen Wert typischerweise im Bereich 10° bis 40° liegt.

Außerdem bevorzugt ist der Drehwinkel durch die Nut symmetrisch vorgegeben bezüglich einer geraden Durchführung des Rohrstücks durch die Gehäusewandung. D. h., dass das Rohrstück ausgehend von einer geraden Durchführung zu zwei Seiten hin oder in zwei Richtungen (selbe Drehachse aber unterschiedliche Drehrichtungen) verkippbar ist, beispielsweise in jede Richtung um 10 °.

Insbesondere wenn die Nut in der Querrichtung langgestreckt ist, ist weiterhin eine Ausgestaltung der Nut zweckdienlich, bei der diese in Querrichtung gesehen zwei Außenbereiche und einen dazwischenliegenden Mittenbereich aufweist, wobei die Breite der Nut in den Außenbereichen größer ist als im Mittenbereich.

In vorteilhafter Weiterbildung nimmt dabei die Breite der Nut ausgehend vom Mittenbereich hin zu jedem der Außenbereiche kontinuierlich zu. Typisch ist dabei dann eine Ausgestaltung, bei der die Nut eine x-förmige Geometrie aufweist, wobei sich die x-förmige Geometrie üblicherweise bei einer Draufsicht auf die Nut zeigt, also insbesondere bei einer Draufsicht entlang der zuvor genannten Drehachse.

Unabhängig davon ist eine Ausgestaltung des Rohrstücks von Vorteil, bei der die Nut bodenseitig eine ebene Anliegefläche für den Wandungsabschnitt ausbildet.

Die zuvor beschriebene Nut wird außerdem bevorzugt durch eine zweite Nut ergänzt, die üblicherweise gleichartig ausgestaltet ist wie die zuvor beschriebene Nut. Die zuvor beschriebene Nut und die ergänzende zweite Nut sind dabei dann typischerweise auf zwei einander gegenüberliegenden Außenseiten des Rohrabschnitts angeordnet.

Weiter ist das Rohrstück vorzugsweise durch einen starren Körper ausgebildet. Es ist somit bevorzugt nicht durch ein flexibles Rohrstück ausgebildet, also insbesondere nicht durch ein Stück Wellrohr. Zudem weist das Rohrstück bevorzugt auch kein Gelenk auf.

Außerdem bevorzugt ist das Rohrstück einteilig ausgebildet, weiter bevorzugt einstückig und insbesondere monolithisch. Je nach Anwendungsfall ist das Rohrstück dabei aus einem Metall oder einer Metalllegierung ausgebildet.

Zweckdienlich ist weiterhin eine Ausführung, bei der das Rohrstück als Anschlussstück ausgebildet ist und zumindest einen Anschlussabschnitt aufweist zum Anschließen einer Fluidleitung. Je nach Anwendungsfall weist der zumindest eine Anschlussabschnitt dabei zum Beispiel ein Gewinde auf oder ein anderes Verbindungselement, beispielsweise zur Ausbildung eines Schnellverschlusses.

Wie zuvor bereits dargelegt wird die gestellte Aufgabe erfindungsgemäß auch gelöst durch ein Gerätemodul, welches für eine Kraftwärmemaschine ausgestaltet ist, welches also insbesondere eine Baugruppe einer Kraftwärmemaschine ausbildet. Das Gerätemodul weist dabei zumindest eine Komponente eines Kältemittelkreislaufs auf, also zum Beispiel einen Verdichter, einen Verdampfer, einen Kondensator etc.

Unabhängig davon weist das Gerätemodul ein Gehäuse mit zumindest einer Gehäusewandung auf sowie eine Rohrdurchführung durch die zumindest eine Gehäusewandung. Hierbei ist die Rohrdurchführung durch ein zuvor beschriebenes Rohrstück ausgebildet und bevorzugt handelt es sich bei der Rohrdurchführung um eine Durchführung eines einzelnen und einzigen Rohres oder Rohrstücks durch die zumindest einer Gehäusewandung, nämlich des erfindungsgemäßen Rohrstücks.

Zudem ist typischerweise die zuvor genannte zumindest eine Komponente des Kältemittelkreislaufs innerhalb des Gehäuses mit der zumindest einen Gehäusewandung angeordnet. Die zumindest eine Gehäusewandung ist somit dann insbesondere kein Teil der zuvor genannten zumindest einen Komponente des Kältem ittelkreislaufs.

Außerdem ist eine Ausgestaltung des Gerätemoduls bevorzugt, bei der dieses eine Fluidleitung oder einen Fluidleitungsabschnitt aufweist, die bzw. der an das Rohrstück angeschlossen ist. Die Fluidleitung bzw. der Fluidleitungsabschnitt ist dabei je nach Anwendungsfall beispielsweise Teil eines Kältemittelkreislaufs und dementsprechend ausgebildet zur Durchleitung eines Kältemittels. Einer alternativen Ausführungsvariante entsprechend ist die Fluidleitung bzw. der Fluidleitungsabschnitt zum Beispiel Teil eines Heizungskreislaufs und ist dementsprechend ausgebildet zur Durchleitung von Heizungswasser.

Insbesondere wenn das Gerätemodul eine Fluidleitung oder einen Fluidleitungsabschnitt aufweist, die bzw. der an das Rohrstück angeschlossen ist, ist das Rohrstück vorzugsweise als ein zuvor beschriebenes Anschlussstück ausgebildet.

Davon unabhängig ist eine zuvor genannte Fluidleitung bzw. ein zuvor genannter Fluidleitungsabschnitt weiter bevorzugt als eine flexible Fluidleitung bzw. als ein flexibler Fluidleitungsabschnitt ausgebildet, also zum Beispiel durch ein flexibles Wellrohr ausgebildet. Darüber hinaus ist die Fluidleitung bzw. der Fluidleitungsabschnitt vorzugsweise innerhalb des zuvor genannten Gehäuses angeordnet.

Weiter ist bei dem Gerätemodul zweckdienlicherweise ein Wandungsabschnitt der zumindest einen Gehäusewandung in der Nut des Rohrstücks aufgenommen. Dabei ist dann das Rohrstück gemäß zumindest einer Ausführungsvariante gegen die zumindest eine Gehäusewandung verkippbar gelagert. Dies gilt zumindest vor einer Installation des Gerätemoduls und/oder wenn lediglich flexible Fluidleitungen bzw. flexible Fluidleitungsabschnitte an das Rohrstück angeschlossen sind.

Wird das Rohrstück im Zuge einer Installation des Gerätemoduls an eine starre Fluidleitung bzw. einen starren Fluidleitungsabschnitt angeschlossen, beispielsweise außenseitig am Gerätemodul, so wird das Rohrstück hierdurch in seiner Kippstellung fixiert und bildet nachfolgend ein feststehendes Rohrstück aus. D.h., dass in einem solchen Fall zum Beispiel während der Installation ein gewünschter Kippwinkel eingestellt wird und dass das Rohrstück anschließend durch das Anschließen an eine feststehende Fluidleitung bzw. einen feststehenden Fluidleitungsabschnitt in dieser Stellung fixiert wird, so dass in der Folge keine Winkelvariabilität mehr besteht. Je nach Kippwinkel ist dann das Rohrstück zum Beispiel schräg durch die zumindest eine Gehäusewandung des Gerätemoduls geführt.

Einer weiteren Ausführungsvariante entsprechend weist das Gerätemodul eine starre/feststehende Fluidleitung oder einen starren/feststehenden Fluidleitungsabschnitt auf, die bzw. der an das Rohrstück angeschlossen ist und zudem typischerweise innerhalb des zuvor genannten Gehäuses angeordnet ist. In einem solchen Fall wird dann typischerweise während der Montage des Rohrstücks in der zumindest einen Gehäusewandung ein gewünschter Kippwinkel eingestellt und dass das Rohrstück wird anschließend durch das Anschließen der starren/ feststehenden Fluidleitung bzw. des starren/feststehenden Fluidleitungsabschnitts des Gerätemoduls in dieser Stellung fixiert, so dass in der Folge keine Winkelvariabilität mehr besteht. Der Kippwinkel ist somit dann bereits im Auslieferzustand des Gerätemoduls, insbesondere, an einen Endkunden, in seiner Kippstellung fixiert.

Zweckdienlich ist es außerdem, wenn die zumindest eine Gehäusewandung für die Rohrdurchführung einen Durchbruch aufweist mit einer Einführöffnung zum Durchstecken des Rohrstücks im Zuge einer Montage und mit einem sich daran anschließenden Einschiebespalt, in dem das Rohrstück nach der Montage eingeschoben ist. D. h., dass das Rohrstück im Zuge der Montage durch die Einführöffnung hindurchgesteckt wird und nachfolgend seitlich in den Einschiebespalt geschoben wird. Die Einführöffnung ist dabei nach der Montage typischerweise verschlossen, beispielsweise durch eine Art Blindstopfen.

Weiter sind Ausführungsvarianten von Vorteil, bei denen die zumindest eine Gehäusewandung des Gehäuses des Gerätemoduls eine Basiswandung sowie eine Zusatzwandung aufweist, wobei die Rohrdurchführung sowohl durch die Basiswandung und als auch durch die Zusatzwandung geführt ist. Dabei ist dann zudem bevorzugt ein Wandungsabschnitt der Zusatzwandung in der Nut des Rohrstücks aufgenommen, jedoch kein Wandungsabschnitt der Basiswandung.

Die Basiswandung erstreckt sich hierbei vorzugsweise von einem Deckel des Gehäuses bis zu einem Boden des Gehäuses. Davon unabhängig weist die Zusatzwandung in einigen Anwendungsfällen, zumindest abgesehen von der Wandstärke, geringere Abmessungen auf als die Basiswandung. D. h., dass die Basiswandung beispielsweise eine Flächenausdehnung großer 600 cm² aufweist, wohingegen die Zusatzwandung zum Beispiel eine Flächenausdehnung kleiner 600 cm² aufweist. Die Zusatzwandung wird hierbei insbesondere durch eine Art Verriegelungsblech oder Fixierblech ausgebildet.

Typisch ist zudem eine Ausgestaltung der Basiswandung, bei der diese einen Durchbruch aufweist, der durch eine Einführöffnung zum Durchstecken des Rohrstücks im Zuge einer Montage ausgebildet ist. Die Zusatzwandung dagegen weist üblicherweise einen Durchbruch auf mit einer Einführöffnung und mit einem sich daran anschließenden Einschiebespalt.

In vorteilhafter Weiterbildung erfolgt dann eine Montage derart, dass zunächst das Rohrstück in einer Durchsteckrichtung durch den als Einführöffnung ausgebildeten Durchbruch in der Basiswandung gesteckt wird, dass zu einem späteren Zeitpunkt die Zusatzwandung über das Rohrstück gestülpt wird, so dass das Rohrstück die Einführöffnung der Zusatzwandung durchsetzt, und dass nachfolgend die Zusatzwandung seitlich verschoben wird, bis das Rohrstück im Einschiebespalt positioniert ist. Mit der seitlichen Verschiebung wird dabei dann weiter bevorzugt der zuvor beschriebene Wandungsabschnitt der Zusatzwandung in die Nut des Rohrstücks hineingeschoben. Durch dieses Hineinschieben des Wandungsabschnitts der Zusatzwandung ist dann außerdem bevorzugt das Rohrstück derart fixiert, dass dieses in der zuvor genannten Durchsteckrichtung nicht mehr verschiebbar ist.

Wie zuvor bereits dargelegt ist das Gerätemodul für eine Kraftwärmemaschine ausgestaltet. Je nach Anwendungsfall ist die Kraftwärmemaschine dabei beispielsweise als Wärmepumpe und/oder als Kühlgerät für eine Gebäudetemperierung ausgebildet. Alternativ ist die Kraftwärmemaschine zum Beispiel als Wärmepumpe für eine Betriebswassertemperierung ausgebildet. Bevorzugt ist die Kraftwärmemaschine als eine Wärmepumpe ausgebildet, wie sie eingangs beschrieben ist.

Zumindest im verbauten Zustand oder nach einer Installation des Gerätemoduls bildet dieses dann üblicherweise eine Kraftwärmemaschine oder einen Teil, also eine Baugruppe, einer Kraftwärmemaschine aus. Einer Ausführungsvariante entsprechend bildet das Gerätemodul dabei eine Wärmepumpe in Monoblock-Bauweise aus. Einer alternativen Ausführungsvariante entsprechend bildet das Gerätemodul eine Außeneinheit einer Wärmepumpe in Split-Bauweise aus.

Nachfolgend sind Ausführungsbeispiele der Erfindung anhand einer Zeichnung näher erläutert. Darin zeigen:
- Fig. 1: in einer Teilansicht ein Gerätemodul für eine Kraftwärmemaschine mit einem Gehäuse,
- Fig. 2: in einer perspektivischen Ansicht ein Rohrstück als Rohrdurchführung durch eine Gehäusewandung des Gehäuses,
- Fig. 3: in einer Seitenansicht das Rohrstück,
- Fig. 4: in einer perspektivischen die Gehäusewandung mit dem Rohrstück,
- Fig. 5: in einer Frontansicht eine zweite Ausgestaltung der Gehäusewandung,
- Fig. 6: in einer Frontansicht eine dritte Ausgestaltung der Gehäusewandung,
- Fig. 7: in einer Frontansicht eine Basiswandung einer vierten Ausgestaltung der Gehäusewandung und
- Fig. 8: in einer Frontansicht eine Zusatzwandung der vierten Ausgestaltung der Gehäusewandung.

Einander entsprechende Teile und Größen sind in allen Figuren stets mit den gleichen Bezugszeichen versehen.

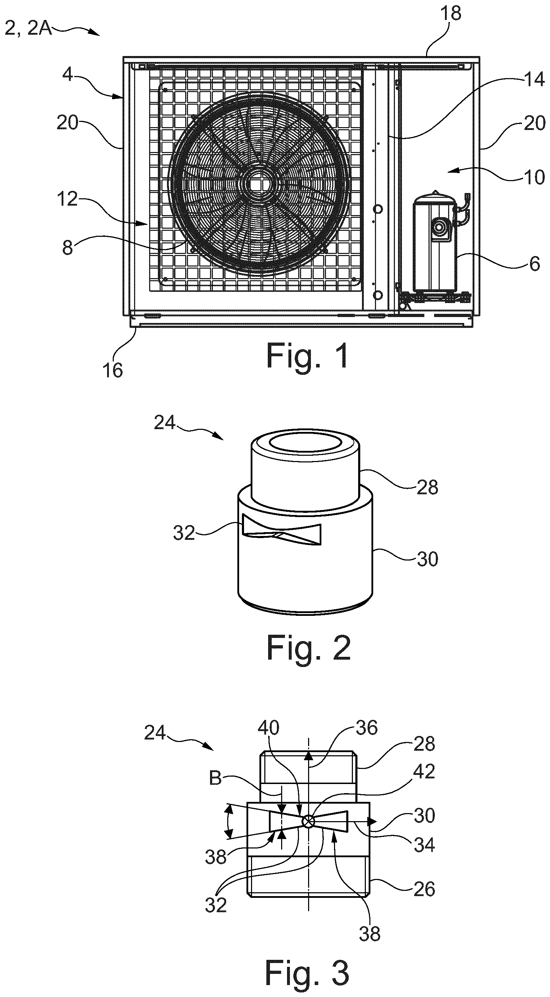

Ein in Fig. 1 teilweise dargestelltes Gerätemodul 2 bildet eine Kraftwärmemaschine aus, die als Wärmepumpe in sogenannter Monoblock-Bauweise ausgeführt ist. Das Gerätemodul 2 ist dabei in Fig. 1 lediglich angedeutet und weist ein Gehäuse 4 auf, innerhalb dessen sich die Komponenten eines Kältemittelkreislaufs befinden. Beispielhaft dargestellt sind in Fig. 1 ein Verdichter 6 sowie ein Lüfter 8, welcher einem hier nicht näher dargestellten Verdampfer vorgeschaltet ist.

Im Ausführungsbeispiel weist das Gehäuse 4 weiter zwei voneinander abgegrenzte Innenräume auf, nämlich einen Verdichter-Raum 10 sowie einem Verdampfer-Raum 12, welche durch eine Zwischenwand 14 voneinander abgetrennt sind. Zudem weist das Gehäuse 4 ein Boden 16, ein Deckel 18 sowie zwei zwischen Boden 16 und Deckel 18 angeordnete Seitenwände 20 auf.

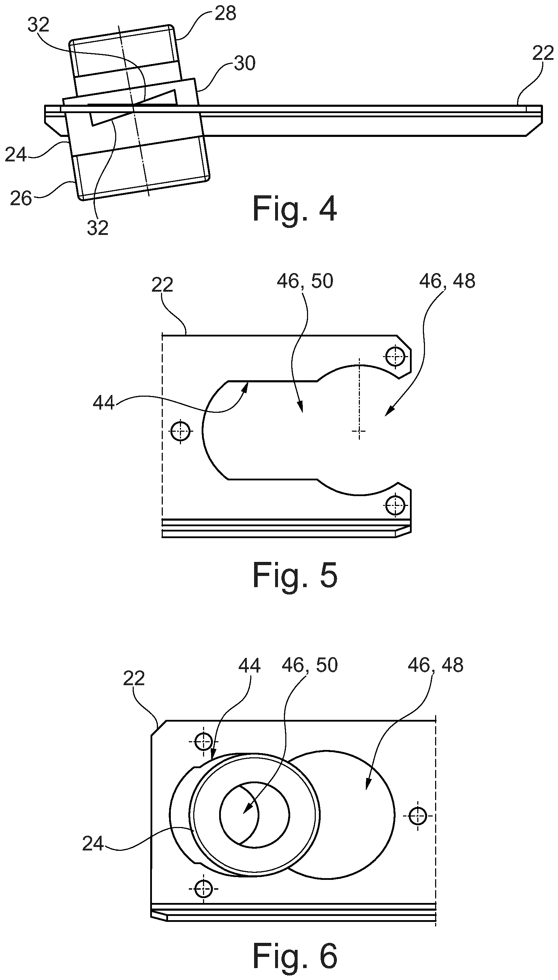

Außerdem weist das Gehäuse 4 eine Rückwand 22 auf. Durch diese Rückwand 22, die in Fig. 1 nicht explizit abgebildet ist, aber in Fig. 4 in einer ersten Ausführungsvariante angedeutet ist, ist eine Rohrdurchführung geführt, welche durch ein Rohrstück 24 ausgebildet ist. Die Rohrdurchführung, und damit das Rohrstück 24, ist Teil eines Heizungskreislaufs und dient zur Durchleitung von Heizungswasser. Eine ergänzende zweite Rohrdurchführung des Heizungskreislaufs ist nicht mit abgebildet. Sie ist in analoger Weise ausgebildet, wie die hier näher beschriebene Rohrdurchführung.

An das Rohrstück 24 ist zum einen eine nicht mit abgebildete Außenleitung angeschlossen, die das Gerätemodul 2 beispielsweise mit einer nicht gezeigten Heizkörperinstallation fluidleitend verbindet. Die Außenleitung ist dabei an einen äußeren Anschlussabschnitt 26 des Rohrstücks 24 angeschlossen. Zum anderen ist an das Rohrstück 24 eine nicht gezeigte Innenleitung angeschlossen, die innerhalb des Gehäuses 4 des Gerätemoduls 2 angeordnet ist. Jene Innenleitung ist dabei an einen inneren Anschlussabschnitt 28 des Rohrstücks 24 angeschlossen und bevorzugt als flexible Fluidleitung ausgebildet. Innenleitung und Außenleitung sind dabei weitere Teile des Heizungskreislaufs.

Zwischen dem äußeren Anschlussabschnitt 26 und dem inneren Anschlussabschnitt 28 des Rohrstücks 24 ist im Ausführungsbeispiel ein mittlerer Rohrabschnitt 30 angeordnet, der außenseitig eine Nut 32 aufweist. Diese Nut ist in Fig. 2 und Fig. 3 zu erkennen, wobei das Rohrstück 24 in Fig. 2 in einer perspektivischen Ansicht dargestellt ist und in Fig. 3 in einer Seitenansicht.

Wie aus Fig. 3 hervorgeht ist die Nut 32 in einer Querrichtung 34 langgestreckt. Sie weist weiter quer zur Querrichtung 34 eine Ausdehnung auf, die entlang der Querrichtung 34 variiert. Diese Ausdehnung wird nachfolgend als Breite B der Nut 32 bezeichnet und entspricht im Ausführungsbeispiel der Ausdehnung der Nut 32 in einer Längsrichtung 36 des Rohrstücks 24.

Die Breite B der Nut 32 variiert im Ausführungsbeispiel nun derart, dass die Nut 32 in Querrichtung 34 gesehen zwei Außenbereiche 38 und einen dazwischenliegenden Mittenbereich 40 aufweist, wobei die Breite B der Nut 32 in den Außenbereichen 38 größer ist als im Mittenbereich 40. Weiter weist die Nut eine x-förmige Geometrie auf, zumindest bei einer Draufsicht auf die Nut 32 entlang einer Drehachse 42, welche quer zur Querrichtung 34 und quer zur Längsrichtung 36 orientiert ist. Fig. 3 zeigt diese Draufsicht auf die Nut 32 entlang der Drehachse 42.

Wie zuvor bereits ausgeführt bildet das Rohrstück 24 eine Rohrdurchführung durch die Rückwand 22 aus. Dabei ist ein Wandungsabschnitt 44 der Rückwand 22 in der Nut 32 des Rohrstücks 24 aufgenommen. Der Wandungsabschnitt 44 weist dabei eine im Wesentlichen einheitliche Dicke auf, die in etwa der Breite B der Nut 32 im Mittenbereich 40 entspricht. Durch die einheitliche Dicke des Wandungsabschnitts und die variierende Breite B der Nut 32 verbleibt in den Außenbereichen 38 der Nut 32 etwas Spiel und das Rohrstück 24 ist infolgedessen gegen die Rückwand 22 verkippbar gelagert. Unter verkippbar ist dabei eine Drehbarkeit um die zuvor genannte Drehachse 42 zu verstehen, wobei die Drehbarkeit durch die Geometrie der Nut 32 auf einen Drehwinkel begrenzt ist.

Im Ausführungsbeispiel in nun zwar das Rohrstück 24 gegen die Rückwand 22 verkippbar in der Rückwand 22 gelagert, jedoch ist das Rohrstück 24 in seiner Kippstellung fixiert, nämlich durch die zuvor genannte Außenleitung, die exemplarisch durch eine starre Fluidleitung ausgebildet ist. Einer alternativen Ausführung entsprechend sind Außenleitung und Innenleitung durch flexible Fluidleitungen ausgebildet und in einem solchen Fall ist dann die Kippstellung des Rohrstücks 24 nicht fixiert.

Das Rohrstück 24 selbst ist im Ausführungsbeispiel als starrer Körper ausgebildet. Es ist typischerweise einteilig und insbesondere einstückig ausgestaltet und besteht beispielsweise aus einem Metall oder einer Metalllegierung.

Für eine einfache Montage des Rohrstücks 24 weist die Rückwand 22 typischerweise einen Durchbruch 46 auf. Dieser Durchbruch 46 wird im Falle der Ausführungen gemäß Fig. 5 und 6 durch eine Einführöffnung 48 und einen sich daran anschließenden Einschiebespalt 50 gebildet. Bei der Montage wird dann das Rohrstück 24 durch die Einführöffnung 48 hindurchgesteckt und nachfolgend seitlich in den Einschiebespalt 50 eingeschoben.

In Fig. 5 ist die Einführöffnung 48 weiter als randseitige Öffnung ausgebildet. In Fig. 6 ist die Einführöffnung 48 als Einführloch ausgebildet. Davon unabhängig ist die Rückwand 22 in den zuvor beschriebenen Ausführungsvarianten als einfache Wandung ausgebildet.

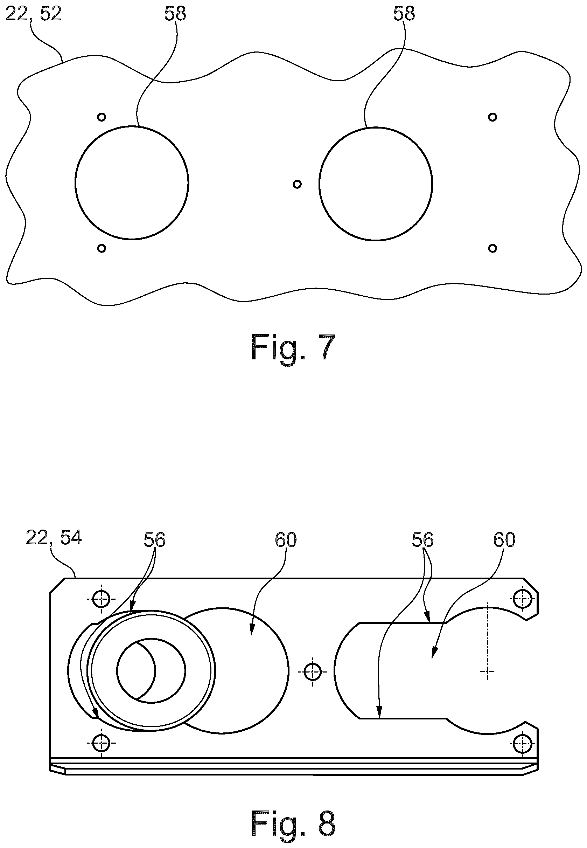

Eine weitere Ausgestaltungsvariante des Gerätemoduls 2 ist in Fig. 7 und Fig. 8 angedeutet. Hier weist die Rückwand 22 im Gegensatz zu den zuvor beschriebenen Ausführungsvarianten eine Basiswandung 52 sowie eine Zusatzwandung 54 auf, wobei die Rohrdurchführungen des Heizungskreislaufs sowohl durch die Basiswandung 52 und als auch durch die Zusatzwandung 54 geführt ist. Dabei ist dann ein Wandungsabschnitt 56 der Zusatzwandung 54 in der Nut 32 des Rohrstücks 24 aufgenommen, jedoch kein Wandungsabschnitt der Basiswandung 52.

Die Basiswandung 52 erstreckt sich hierbei vom Deckel 18 des Gehäuses 4 bis zum Boden 16. Die Zusatzwandung 54 dagegen weist geringere Abmessungen auf. Sie ist durch eine Art Verriegelungsblech oder Fixierblech ausgebildet. Weiter weist die Basiswandung 52 für jede der Rohrdurchführungen einen Durchbruch 58 aufweist, der durch eine Einführöffnung zum Durchstecken des Rohrstücks 24 im Zuge einer Montage ausgebildet ist. Die Zusatzwandung 54 dagegen weist für jede der Rohrdurchführungen einen Durchbruch 60 auf mit einer Einführöffnung und mit einem sich daran anschließenden Einschiebespalt. Die Durchbrüche 60 in der Zusatzwandung 54 sind daher ausgestaltet wie die Durchbrüche 46 in der einfachen Rückwand 22 gemäß den Ausführungsvarianten Fig. 4 bis Fig. 6.

Bei der Ausgestaltung der Rückwand 22 gemäß Fig. 7 und Fig. 8 erfolgt dann eine Montage derart, dass zunächst das Rohrstück 24 in einer Durchsteckrichtung durch den als Einführöffnung ausgebildeten Durchbruch 58 in der Basiswandung 52 gesteckt wird, dass zu einem späteren Zeitpunkt die Zusatzwandung 54 über das Rohrstück 24 gestülpt wird, so dass jedes Rohrstück 24 die zugehörige Einführöffnung der Zusatzwandung 54 durchsetzt, und dass nachfolgend die Zusatzwandung 54 seitlich verschoben wird, bis das jeweilige Rohrstück 24 im zugehörigen Einschiebespalt positioniert ist.

Mit der seitlichen Verschiebung wird dabei dann der jeweilige Wandungsabschnitt 56 der Zusatzwandung 54 in die zugehörige Nut 32 des jeweiligen Rohrstücks 24 hineingeschoben. Durch dieses Hineinschieben ist dann das jeweilige Rohrstück 24 derart fixiert, dass dieses in der zuvor genannten Durchsteckrichtung nicht mehr verschiebbar ist. Zudem ist das jeweilige Rohrstück 24 typischerweise auch derart fixiert, dass dieses nicht mehr um die Durchsteckrichtung drehbar ist.

Bevorzugt wird außerdem in einem weiteren Montageschritt die Zusatzwandung 54 an der Basiswandung 52 festgeschraubt, so dass nachfolgen Position und Ausrichtung der Zusatzwandung 54 relativ zur Basiswandung 52 nicht mehr veränderbar ist.

### Bezugszeichenliste

- 2: Kraftwärmemaschine
- 4: Gehäuse
- 6: Verdichter
- 8: Lüfter
- 10: Verdichter-Raum
- 12: Verdampfer-Raum
- 14: Zwischenwand
- 16: Boden
- 18: Deckel
- 20: Seitenwand
- 22: Rückwand
- 24: Rohrstück
- 26: äußerer Anschlussabschnitt
- 28: innerer Anschlussabschnitt
- 30: Rohrabschnitt
- 32: Nut
- 34: Querrichtung
- 36: Längsrichtung
- 38: Außenbereich
- 40: Mittenbereich
- 42: Drehachse
- 44: Wandungsabschnitt
- 46: Durchbruch
- 48: Einführöffnung
- 50: Einschiebespalt
- 52: Basiswandung
- 54: Zusatzwandung
- 56: Wandungsabschnitt
- 58: Durchbruch
- 60: Durchbruch
- B: Breite

## Patentansprüche

1. Rohrstück (24) ausgebildet als Rohrdurchführung (24) für eine Gehäusewandung (22) und aufweisend einen Rohrabschnitt (30),
wobei der Rohrabschnitt (30) außenseitig eine Nut (32) aufweist, die zur Aufnahme eines Wandungsabschnitts (44) der Gehäusewandung (22) ausgebildet ist, wobei sich die Nut (32) in einer Querrichtung (34) erstreckt und wobei eine Ausdehnung der Nut (32), nämlich eine Breite (B) der Nut (32), entlang der Querrichtung (34) derart variiert, dass der Rohrabschnitt (30) relativ zum Wandungsabschnitt (44) verkippbar ist.

2. Rohrstück (24) nach Anspruch 1,
wobei die Nut (32) in Querrichtung (34) gesehen zwei Außenbereiche (38) und einen dazwischenliegenden Mittenbereich (40) aufweist und wobei die Breite (B) der Nut (32) in den Außenbereichen (38) größer ist als im Mittenbereich (40).

3. Rohrstück (24) nach Anspruch 2,
wobei die Nut (32) eine x-förmige Geometrie aufweist.

4. Rohrstück (24) nach einem der Ansprüche 1 bis 3,
wobei die Nut (32) bodenseitig eine ebene Anliegefläche für den Wandungsabschnitt (44) ausbildet.

5. Rohrstück (24) nach einem der Ansprüche 1 bis 4,
wobei dieses durch einen starren Körper ausgebildet ist.

6. Rohrstück (24) nach einem der Ansprüche 1 bis 5,
wobei dieses einstückig ausgebildet ist.

7. Rohrstück (24) nach einem der Ansprüche 1 bis 6,
wobei dieses als Anschlussstück (24) ausgebildet ist und zumindest einen Anschlussabschnitt (26,28) zum Anschließen einer Fluidleitung aufweist.

8. Gerätemodul (2) für eine Kraftwärmemaschine aufweisend eine Komponente (6) eines Kältemittelkreislaufs, aufweisend ein Gehäuse (4) mit zumindest einer Gehäusewandung (22) und aufweisend eine Rohrdurchführung (24) durch die zumindest eine Gehäusewandung (22),
wobei die Rohrdurchführung (24) durch ein Rohrstück (24) nach einem der vorherigen Ansprüche ausgebildet ist.

9. Gerätemodul (2) nach Anspruch 8,
wobei ein Wandungsabschnitt (44) der zumindest einen Gehäusewandung (22) in der Nut (32) des Rohrstücks (24) aufgenommen ist, so dass das Rohrstück (24) gegen die zumindest eine Gehäusewandung (22) verkippbar gelagert ist.

10. Gerätemodul (2) nach Anspruch 8 oder 9,
wobei an das Rohrstück (24) eine flexible Fluidleitung angeschlossen ist.

11. Gerätemodul (2) nach einem der Ansprüche 8 bis 10,
wobei die zumindest einen Gehäusewandung (22) für die Rohrdurchführung (24) einen Durchbruch (46) aufweist mit einer Einführöffnung (48) zum Durchstecken des Rohstücks (24) im Zuge einer Montage und mit einem sich daran anschließenden Einschiebespalt (50), in dem das Rohrstück (24) eingeschoben ist.

12. Gerätemodul (2) nach einem der Ansprüche 8 bis 10,
wobei die zumindest einen Gehäusewandung (22) eine Basiswandung (52) und eine Zusatzwandung (54) aufweist, wobei die Rohrdurchführung (24) durch die Basiswandung (52) und durch die Zusatzwandung (54) durchgeführt ist, wobei die Basiswandung (52) einen Durchbruch (58) aufweist mit einer Einführöffnung zum Durchstecken des Rohstücks (24) im Zuge einer Montage und wobei die Zusatzwandung (54) einen Durchbruch (60) aufweist mit einer Einführöffnung und mit einer mit einem sich daran anschließenden Einschiebespalt.

13. Gerätemodul (2) nach einem der Ansprüche 8 bis 11,
wobei dieses ausgebildet ist für eine Kraftwärmemaschine, die als Wärmepumpe und/oder als Kühlgerät für eine Gebäudetemperierung ausgestaltet ist.
